Europäisches Patentamt

European Patent Office

Office européen des brevets

(19)

(11) EP 1 589 211 A1

(12) **EUROPEAN PATENT APPLICATION**
published in accordance with Art. 158(3) EPC

(43) Date of publication:
26.10.2005 Bulletin 2005/43

(51) Int Cl.7: **F02D 45/00**, F02D 29/00,
E02F 9/20

(21) Application number: 04706369.8

(22) Date of filing: 29.01.2004

(86) International application number:
PCT/JP2004/000852

(87) International publication number:
WO 2004/067939 (12.08.2004 Gazette 2004/33)

(84) Designated Contracting States:
AT BE BG CH CY CZ DE DK EE ES FI FR GB GR
HU IE IT LI LU MC NL PT RO SE SI SK TR
Designated Extension States:
AL LT LV MK

(30) Priority: 31.01.2003 JP 2003023472

(71) Applicant: KOBELCO CONSTRUCTION
MACHINERY CO., LTD.
Hiroshima-shi, Hiroshima 731-0138 (JP)

(72) Inventors:
• ASAKAGE, Tomohiko
Hiroshima-shi, Hiroshima 731-0138 (JP)
• HAYASHI, Norihiko
Hiroshima-shi, Hiroshima 731-0138 (JP)

(74) Representative: Bailey, David Martin et al
Brookes Batchellor LLP,
102-108 Clerkenwell Road
London EC1M 5SA (GB)

(54) **ENGINE CONTROL DEVICE FOR AND ADMINISTRATION SYSTEM FOR CONSTRUCTION MACHINE**

(57) A engine control device for a construction machine of the present invention is configured so that the engine control device comprises an engine (10), a hydraulic pump (5) driven by the engine (10) serving as a power source, a hydraulic actuator (6) actuated by pressure oil discharged from the hydraulic pump (5), working state determining means (7) for determining whether the construction machine is in a working state or a nonworking state, and engine control means (8) for automatically stopping the engine (10) upon the working state determining means (7) determining that the construction machine is in the non-working state, including stop history storing means (13, 14, 16) for readably storing a stop history of the engine (10) stopped by the engine control means (8).

FIG.1

EP 1 589 211 A1

**Description**

TECHNICAL FIELD

The present invention relates to an engine control device and a management system for a construction machine adapted to automatically stop an engine upon no operation being carried out.

BACKGROUND ART

Conventionally, there has been known an engine control system that detects a working state of a construction machine based upon opening/closing of a gate lever adapted to open/close a gateway of a cabin, stops an engine upon detecting a non-working state, and continues driving the engine upon detecting the working state, thereby restraining a wasteful fuel consumption, and reducing exhaust gas harmful to the environment (refer to Japanese Patent Laid-Open No. 2001-41069, for example).

With this engine control system, if the gate lever is opened upon an operator getting out of the cabin, the engine is stopped, and actuators are not activated even if respective operating levers are operated, and, on the other hand, if the operator gets into the cabin and the gate lever is closed, the engine automatically starts and the actuators become active according to operations carried out on the operating levers.

Consequently, with this type of engine control system, the exhaust gas is not emitted in the non-operation state, thereby contributing to prevention of air pollution.

However, the conventional engine control system has a problem that it is not possible to recognize whether an automatic stop of the engine is effective to an extent of preventing the environmental pollution.

More specifically, although the above engine control system is intended to restrain the wasteful fuel consumption, it is not clear how much fuel saving effect is provided by automatically stopping the engine during the non-working state. Especially, although an owner of the construction machine wishes to know how much a burden of fuel cost is actually reduced, the owner cannot know it, and thus cannot evaluate the engine control system.

Moreover, with this system, the engine is automatically stopped in a case where the gate lever is raised upon the operator temporarily leaving or waiting as well as in a case where the engine is stopped intentionally by the operator upon a work being finished or an operator's rest, thus frequency of starting the engine increases, and loads are consequently applied on engine starting equipment such as a starter motor. If these loads decrease the life of the starter motor, there is such a problem that the construction machine may be stopped unexpectedly.

DISCLOSURE OF THE INVENTION

The present invention is devised in view of the foregoing problems of the conventional engine control system, and provides an engine control device and a management system for a construction machine which enable quantitative recognition of a fuel saving effect brought about by an automatic engine stop, and recognition of the life of engine starting equipment.

The present invention described below relates to an engine control device that enables the quantitative recognition of the fuel saving effect of the automatic engine stop, an engine control device provided with an automatic engine stop function which enables recognition of the life of the engine starting equipment, and a management system for a construction machine provided with the above respective engine control devices.

The automatic engine stop function according to the present invention implies a function that stops an engine upon predetermined conditions (for example, a gate lever used to open/close an access passage for an operator is opened, an operating lever adapted to operate a work actuator is not being operated, or the gate lever is opened and the operating lever is not being operated) being met.

The present invention, which enables the quantitative recognition of the fuel saving effect brought about by the automatic engine stop, provides an engine control device for a construction machine including an engine, a hydraulic pump driven by the engine serving as a power source, a hydraulic actuator actuated by pressure oil discharged from the hydraulic pump, working state determining means for determining whether a construction machine is in a working state or a non-working state, and engine control means for automatically stopping the engine when the working state determining means determines that the construction machine is in the non-working state, including stop history storing means for readably storing a stop history of the engine stopped by the engine control means.

According to the present invention, if the engine is automatically stopped based upon the determination that the construction machine is in the non-working state, since there is provided the configuration that the stop history is stored in the stop history storing means in a externally extractable state, the fuel saving effect brought about by the automatic engine stop can be quantitatively recognized based upon the stop history.

Moreover, according to the present invention, if the stop history storing means is configured to store the number of times the engine is stopped as the stop history, it is possible to calculate a fuel quantity saved by storing the number of the times the engine is automatically stopped.

Moreover, according to the present invention, if there is provided stop period calculating means for calculating a stop period from a stop to a restart of the engine, and the stop history storing means is configured to store an accumulated stop period which is obtained by accumulating the stop periods calculated by the stop period calculating means within a predetermined period as the stop history, it is possible to more precisely calculate the saved fuel, for example, by storing the stop period from the automatic stop to the restart of the engine.

Moreover, according to the present invention, if there are provided fuel consumption storing means for storing a fuel consumption per unit period of the construction machine, and saved fuel calculating means for calculating the fuel quantity saved within the accumulated stop period by multiplying the fuel consumption quantity by the accumulated stop period, it is possible to quantitatively recognize an effect of the automatic engine stop.

Moreover, according to the present invention, if there is provided fuel cost converting means for converting the calculated saved fuel into a fuel cost, it is possible to offer more specific recognition in a form of the saved fuel cost.

Moreover, according to the present invention, there may be provided output means for outputting any one or multiple of the number of stops stored in the stop history storing means, the calculated saved fuel, and the calculated fuel cost. As a result, it is also possible to notify an operator operating the construction machine of negligence of turning off the engine.

Moreover, according to the present invention, if there are provided calculating means for calculating a remaining life of engine starting equipment based upon the number of stops stored in the stop history storing means for each time the engine is stopped, determining means for determining whether the remaining life calculated by the calculating means is shorter than a preliminary life set a fixed period prior to the life, and notifying means for raising an alarm upon the determining means determining that the remaining life is shorter than the preliminary life, it is possible to recognize the life of the engine starting equipment before the engine starting equipment breaks down to cause the construction machine to stop.

Moreover, if the determining means is configured to control the engine control means such that the automatic stop function of the engine is not activated upon determining that the remaining life is shorter than the preliminary life, the engine is stopped only if the operator intends, thereby extending the life of the engine starting equipment to a certain extent.

Moreover, the present invention provides a management system for a construction machine where the construction machine having the above engine control device provided with the automatic engine stop function includes transmitting means for transmitting the stop history, and a management device managing the construction machine includes receiving means for receiving the transmitted stop history, saved fuel calculating means for calculating a savable fuel quantity based upon the received stop history, and converting means for converting the calculated saved fuel calculated by the saved fuel calculating means into an amount of money.

According to the above management system, the history of the automatic stop of the engine of the construction machine is transmitted to a manager who manages the construction machine, and thus is managed by the manager. Consequently, for multiple construction machines for example, it is possible to recognize the fuel saved by the respective construction machines based upon the received histories. Moreover, from the received histories, it is possible to calculate saved fuel and saved cost.

Moreover, the present invention provides another management system for a construction machine where the construction machine having the above engine control device which can recognize the life of the engine starting equipment includes transmitting means for transmitting the stop history, and a management device managing the construction machine includes receiving means for receiving the transmitted stop history, a second calculating means for calculating a remaining life of the engine starting equipment based upon the received stop history, a second determining means for determining whether the remaining life calculated by the second calculating means is shorter than a second preliminary life set a fixed period prior to the life, and a second notifying means for raising an alarm upon the second determining means determining that the remaining life is shorter than the second preliminary life.

According to the above management system, it is possible to recognize the life of the engine starting equipment by means of the management device provided for a manager who manages the construction machine, for example, and thus to arrange replacement parts before the engine starting equipment breaks down, resulting in eliminating a wait period required for the construction machine.

BRIEF DESCRIPTION OF THE DRAWINGS

Fig. 1 is a block diagram showing a configuration of an engine control device according to the present invention;
Fig. 2 is a flowchart showing a control operation of a controller shown in Fig. 1;

Fig. 3 is a time chart describing processing by an accumulated stop period calculating unit shown in Fig. 1;

Fig. 4 is a block diagram showing another embodiment of the engine control device according to the present invention;

Fig. 5 is a descriptive view showing stored contents of a fuel database shown in Fig. 4;

Fig. 6 is a block diagram showing a management system for a construction machine according to the present invention;

Fig. 7 is a flowchart showing a control operation of a controller shown in Fig. 6;

Fig. 8 is a block diagram showing still another configuration of the engine control device according to the present invention;

Fig. 9 is a flowchart showing a control operation of a controller shown in Fig. 8; and

Fig. 10 is a block diagram showing another management system for a construction machine according to the present invention.

BEST MODE FOR CARRYING OUT THE INVENTION

A detailed description will be given of the present invention based upon embodiments shown in drawings.

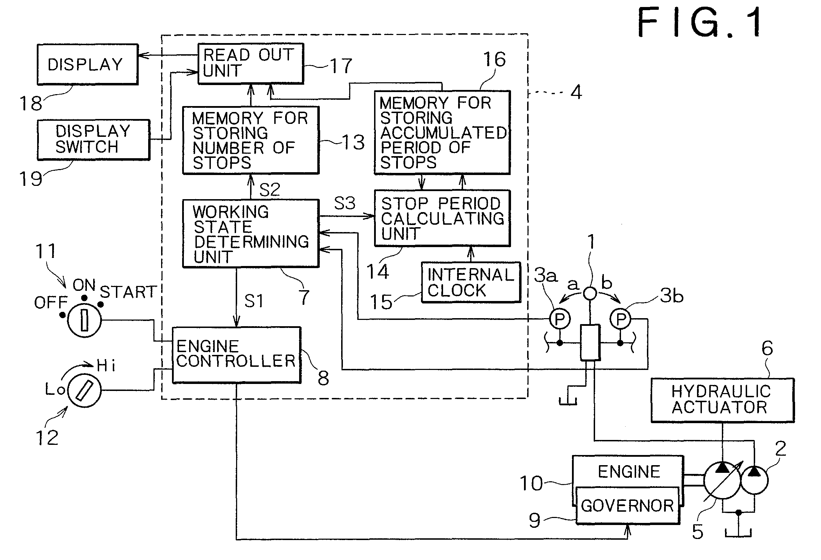

Figs. 1 to 5 show embodiments of an engine control device for a construction machine according to the present invention.

In Fig. 1, the construction machine according to the present invention is provided with a so-called automatic engine stop function which automatically stops an engine in a non-working state such as a state of work being suspended, or a standby state.

This automatic engine stop function detects an operation state of an hydraulic actuator, recognizes that the construction machine is in the non-working state and stops the engine upon no operation being carried out for more than a fixed period, and determines that the construction machine is in a working state, and maintains driving of the engine upon an operation being carried out within the fixed period.

If an operating lever 1 used to detect the working state is turned down toward a direction "a", pilot pressure from a pilot pump 2 is led out according to an operation quantity of the operating lever 1, and the led-out pilot pressure is detected by an pressure sensor 3a. If the operating lever 1 is turned down toward a direction "b", pilot pressure is led out according to the operation quantity in the same manner, and is detected by a pressure sensor 3b.

The pilot pressure detected by the pressure sensors 3a and 3b are supplied to a controller 4 serving as an engine control device, and the controller 4 applies the pilot pressure to a pilot port of a direction control valve (not shown). As a result, a flow rate and a direction of the pressure oil discharged from a variable capacity hydraulic pump 5 are controlled, and the pressure oil is supplied to a hydraulic actuator 6.

A description will now be given of a configuration of the controller 4.

The controller 4 includes a working state determining unit (working state determining means) 7 to which the pilot pressure are input from the pressure sensors 3a and 3b. If the pilot pressure exceeding a threshold is input from the pressure sensor 3a or 3b, the working state determining unit 7 determines that the construction machine is in the working state, and if the pilot pressure exceeding the threshold is not input, the working state determining unit 7 determines that the construction machine is in the non-working state.

If the working state determining unit 7 determines that the construction machine is in the non-working state, an engine stop signal S1 is input to an engine controller (engine control means) 8, and the engine controller 8 controls a governor 9 to stop an engine 10.

On the other hand, if the working state determining unit 7 determines that the construction machine is in the working state, the engine stop signal S1 is not input to the engine controller 8, and the driving of the engine 10 is maintained.

A key switch 11 and a dial type accelerator 12 are respectively connected to an input side of the engine controller 8, and the engine 10 is started upon the key switch 11 being turned through off → on → start positions.

The dial type accelerator 12 is adjusted according to a work load, and is adjusted to "Low" for a low work load, to "High" for a high work load, or to a middle therebetween.

If the working state determining unit 7 determines that the construction machine is in the non-working state, signals S2 and S3 are respectively supplied to a memory for storing the number of stops 13 and a stop period calculating unit 14. Note that the memory for storing the number of stops 13 and the stop period calculating unit 14 function as stop history storing means.

The memory for storing the number of stops 13 increments the stored number of stops by one for each time the signal S2 is input and updates stored content.

The stop period calculating unit 14 refers to an internal clock 15 upon the signal S3 being input to obtain a time when the engine 10 is automatically stopped, and temporality stores the time. If the operating lever 1 is then operated to resume the work, the working state determining unit 7 determines that the construction machine is in the working state, and the engine controller 8 restarts the engine 10. On this occasion, the signal S2 for the second time is simultaneously input to the stop period calculating unit 14, and the stop period calculating unit 14 refers to the internal clock 15 to obtain a time when the engine 10 is restarted, and calculates a period during which the engine 10 is stopped by subtracting the engine stop time previously and temporarily stored from the restart time.

The calculated stop period is stored in a memory for storing accumulated period of stops 16. The memory for storing accumulated period of stops 16 accumulates a stored stop period for each time the stop period calculating unit 14 supplies the stop period, and updates the stored content.

The contents of the memory for storing the number of stops 13 and the memory for storing accumulated period of stops 16 are to be read out by a read out unit 17, and read contents are displayed on a screen of a display (output means) 18. Note that the display 18 uses a liquid crystal display unit which is provided for a control box, for example, and usually displays contents of the work, and switches the display to the number of stops and the accumulated stop period upon a display switch 19 is depressed.

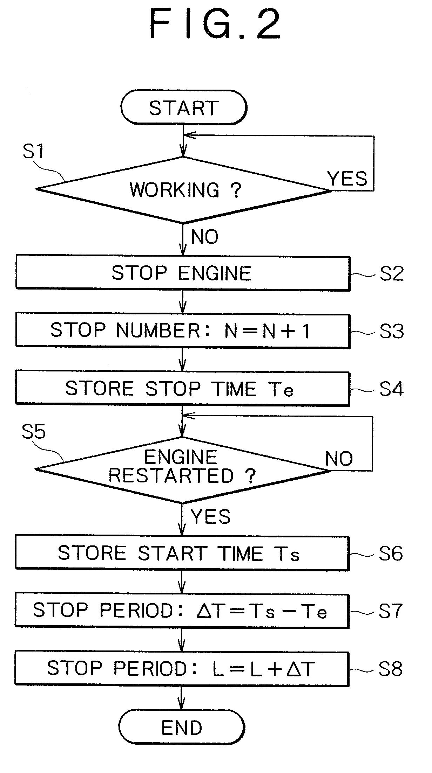

A description will now be given of a control operation of the controller 4 with reference to a flowchart in Fig. 2.

Note that it is assumed that the engine 10 is in a state where the engine 10 is already started.

If the operating lever 1 is not operated for the fixed period, the state is the non-working state. Therefore the working state determining unit 7 determines "NO" in Step S1, and outputs an engine stop command to the engine controller 8.

Upon receiving the engine stop command, the engine controller 8 controls the governor 9 to cut a fuel supplied to the engine 10 to stop the engine 10 (Step S2).

The working state determining unit 7 outputs the signal S2 to the memory for storing the number of stops 13 and the signal S3 to the stop period calculating unit 14 respectively, upon receiving the signal S2, the memory for storing the number of stops 13 updates the previously stored stop number N as N=N+1, namely by incrementing by 1 (Step S3).

On the other hand, upon receiving the signal S3, the stop period calculating unit 14 refers to the internal clock 15 to store a stop time Te when the engine 10 is automatically stopped in a buffer (Step S4).

If the operating lever 1 is then operated to resume the work, the engine 10 is restarted, and a determination of "YES" is made in Step S5.

On this occasion, the stop period calculating unit 14 refers to the internal clock 15, to store an engine start time Ts in the buffer (Step S6), and calculates a stop period $\Delta T$ during which the engine 10 is stopped according to the following equation (1):

$$\Delta T = Ts - Te \tag{1}$$

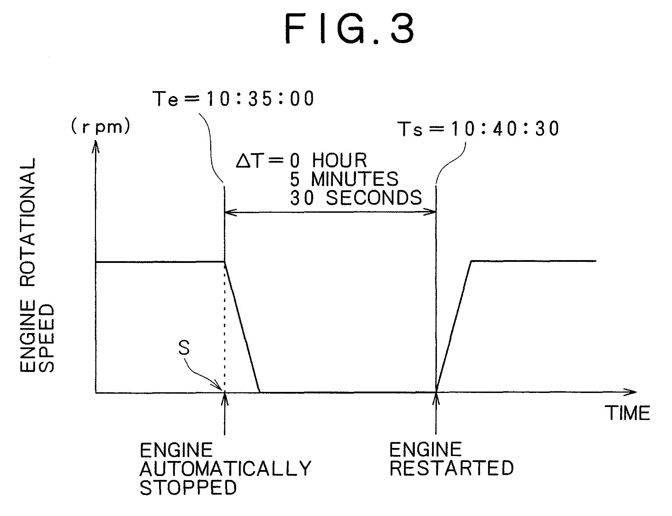

Specifically, as shown in Fig. 3, if the automatic engine stop time Te is 10:35:00, and the engine restart time Ts is 10:40:30, $\Delta T$ = 0 hours 5 minutes 30 seconds is calculated. Note that an abscissa axis and an ordinate axis respectively represent a time and an engine rotational speed in Fig. 3. Moreover, in Fig. 3, S denotes timing at which the stop number N stored in the memory for storing the number of stops 13 is incremented.

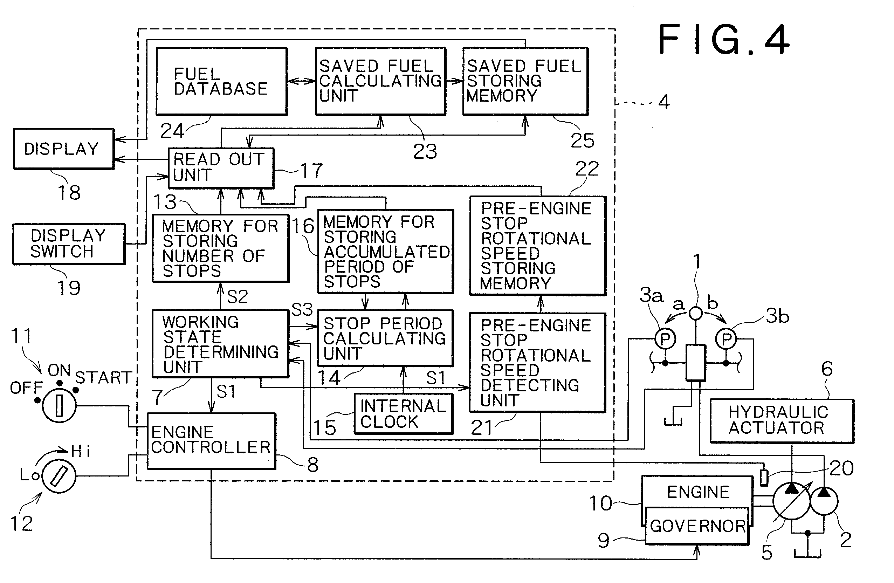

Fig. 4 shows another embodiment of the engine control device.

Note that in the following description, the same components are denoted by the same numerals as of Fig. 1, and their explanation will be omitted.

In Fig. 4, reference numeral 20 denotes a rotation sensor for detecting the engine rotational speed, and the engine rotational speed output from the rotation sensor 20 as a signal is supplied to a pre-engine stop rotational speed detecting unit 21.

Upon receiving the signal S1 from the working state determining unit 7, the pre-engine stop rotational speed detecting unit 21 supplies a pre-engine stop rotational speed storing memory 22 with the engine rotational speed for storing.

The engine rotational speed prior to the stop stored in the pre-engine stop rotational speed storing memory 22 is read out by the read out unit 17, and is supplied to a saved fuel calculating unit (saved fuel calculating means) 23.

The saved fuel calculating unit 23 refers to a fuel database (fuel consumption storing means) 24, reads out a fuel consumption corresponding to the engine rotational speed prior to the engine 10 being stopped, and calculates the saved fuel quantity.

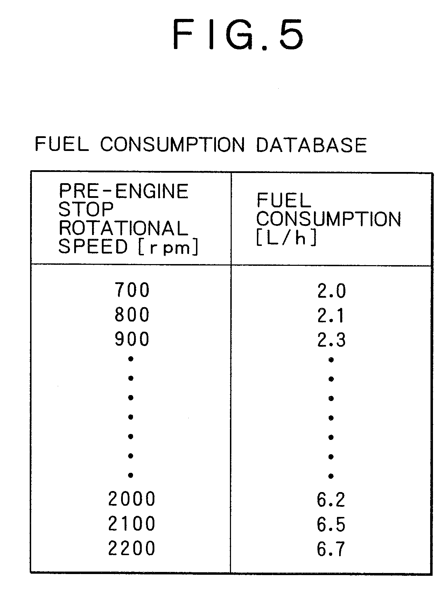

Fig. 5 is a descriptive view showing contents of the fuel database 24.

In the fuel database 24, pre-engine stop rotational speeds [rpm] are sequentially stored from "Low" to "High", and associated fuel consumptions [L/hr] are stored for the respective rotational speeds.

Upon the engine 10 being automatically stopped while the dial type accelerator 12 is adjusted to 900 [rpm] on the "Low" side, for example, the fuel of 2.3 L per unit period would be continuously consumed if the same state continues. Upon the engine 10 being automatically stopped while the dial type accelerator 12 is adjusted to 2200 [rpm] on the "High" side, for example, the fuel of 6.7 L per unit period would be continuously consumed if the same state continues.

The fuel saved in this way varies depending on the rotational speed prior to the engine 10 being automatically stopped.

It is thus possible to obtain a more accurate saved fuel by considering the engine rotational speed before the engine stop. Note that the pre-engine stop rotational speed is to be read out from the pre-engine stop rotational speed storing memory 22.

The saved fuel calculating unit 23 thus calculates a saved fuel L saved during the stop period for each time the engine 10 is automatically stopped by multiplying the fuel consumption obtained from the fuel database 24 by the accumulated stop period stored in the memory for storing accumulated period of stops 16 according to the following equation (2):

$$\text{Saved fuel L} = \text{Engine stop period [hr]} \times \text{Fuel consumption [L/hr]} \qquad (2)$$

The saved fuel L is accumulated for a predetermined period, and is then stored in the saved fuel storing memory 25.

The saved fuel can be shown on the display 18 upon the display switch 19 being depressed. Note that the saved fuel may be converted into a fuel cost by the saved fuel calculating unit 23, and may be shown as the fuel cost represented in an amount of money. In this case, the saved fuel calculating unit 23 functions as fuel cost converting means.

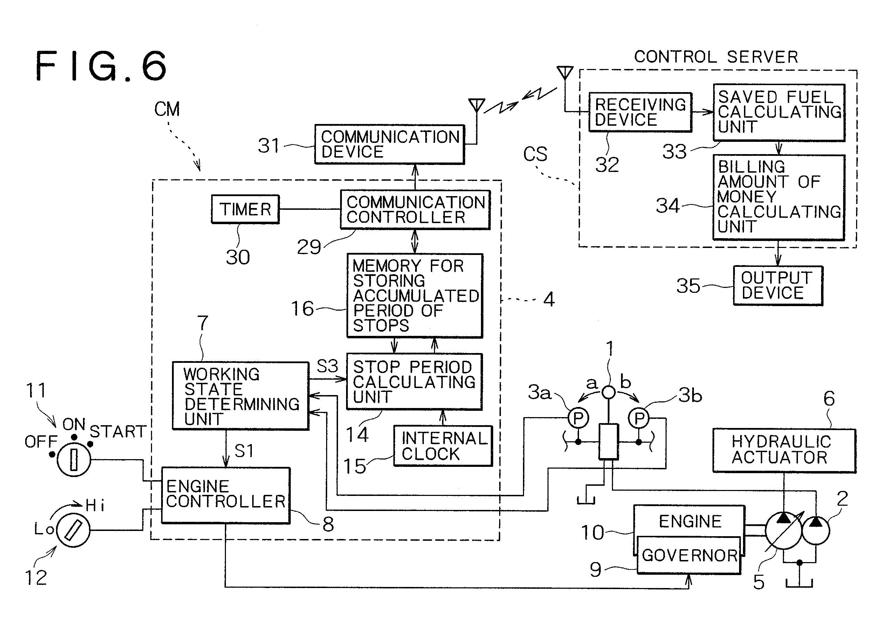

Fig. 6 shows a management system for a construction machine according to the present invention.

The engine control devices described in the respective embodiments display the engine stop period or the saved fuel cost on the display 18 of the construction machine to notify an operator of a fuel saving effect.

On the other hand, the management system according to the present embodiment is configured such that a history of the automatic stop of the engine 10 is transmitted to a control server, and the control server manages the saved fuel and the like.

In the management system shown in Fig. 6, the stop period calculating unit 14 on the construction machine calculates a period during which the engine 10 is being stopped, and the period is then sequentially stored and accumulated in the memory for storing accumulated period of stops 16.

The memory for storing accumulated period of stops 16 is connected to a communication controller 29. Upon receiving a signal output at a predetermined cycle from a timer 30, the communication controller 29 reads out the accumulated stop period stored in the memory for storing accumulated period of stops 16, and transmits the accumulated stop period to a control server CS via a communication device 31. Note that the communication controller 29 and the communication device 31 function as transmitting means.

The control server CS includes a receiving device (receiving means) 32 that receives the accumulated stop period transmitted from a construction machine CM, a saved fuel calculating unit (saved fuel calculating means) 33 for calculating the saved fuel quantity based upon the received accumulated stop period, and a billing amount of money calculating unit (converting means) 34 for calculating a billing amount of money based upon the calculated saved fuel quantity.

This billing amount of money calculating unit 34 calculates a billing amount of money by multiplying the saved fuel by a fixed coefficient [Yen/L]. Upon installing the engine control device, which realizes the fuel saving effect, on a construction machine, this billing amount of money is adapted to restrain an initial investment to relatively low, and to bill a user for a fuel cost actually saved by the installation of the engine control device as an installation cost of the engine control device by installments, for example.

The billing amount of money calculated by the control server CS is output as a bill via an output device 35 such as a printer.

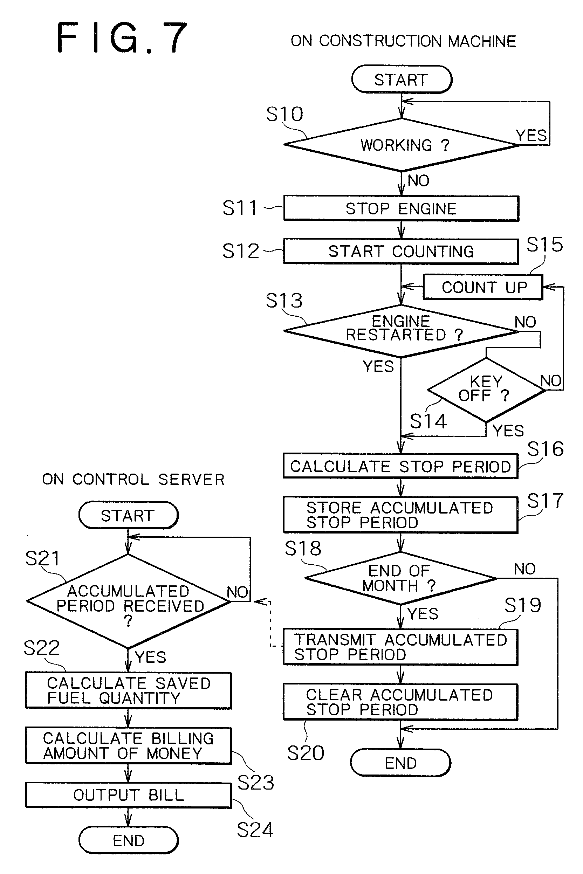

A flowchart shown in Fig. 7 shows processing carried out between the construction machine CM and the control server CS.

In this figure, if the working state determining unit 7 makes a determination of the non-working state (Step S10), the engine 10 is stopped (Step S11).

If the engine 10 is stopped, the stop period calculating unit 14 starts counting of the stop period (Step S12), and continues counting as long as the engine key 11 is not turned off until the engine 10 is restarted (Step S13→S14→S15).

If a determination of "YES" is made in Step S13, namely the engine 10 is restarted, the stop period calculating unit 14 calculates the engine stop period (Step S16), the calculated stop period is supplied to the memory for storing accumulated period of stops 16, and the memory for storing accumulated period of stops 16 accumulates and updates the stored content (Step S17).

If a signal is output at the end of a month as the predetermined cycle according to setting of the timer 30, for example, the communication controller 29 made a determination of "YES" in Step S18, transmits the accumulated stop period in the memory for storing accumulated period of stops 16 via the communication device 31 (Step S19), and clears the content of the memory for storing accumulated period of stops 16 upon completion of the transmission (Step S20).

On the other hand, the accumulated stop period transmitted as the signal from the construction machine CM is received by the receiving device 32 on the control server CS, a determination of "YES" is made in Step S21, and the saved fuel calculating unit 33 calculates the saved fuel quantity (Step S22).

When the saved fuel quantity is calculated, there is carried out the conversion to the billing amount of money (Step S23), and the bill is output (Step S24). The bill is transmitted to a user of the construction machine via the Internet or by mail.

If the construction machine CM is located at a remote place, there may be configured such that the accumulated stop period is transmitted to the control server CS via a communication satellite.

Moreover, transmitted information may include maintenance information, information on the remaining fuel, information relating to the operation management, in addition to the accumulated stop period. Further, if the transmission to the control server CS includes the rotational speed prior to the engine stop, it is possible to precisely calculate the saved fuel.

Although the presence of the working state is detected according to the operation quantity of the operating lever 1 in the above embodiments, the configuration is not limited to this example, and the detection may be carried out according to opening/closing of a gate lever provided in an access passage. In this case, upon the gate lever being opened (being raised), a gate open signal is output, and the engine controller 8 can control the governor 9 to stop the engine 10 upon the gate open signal being output.

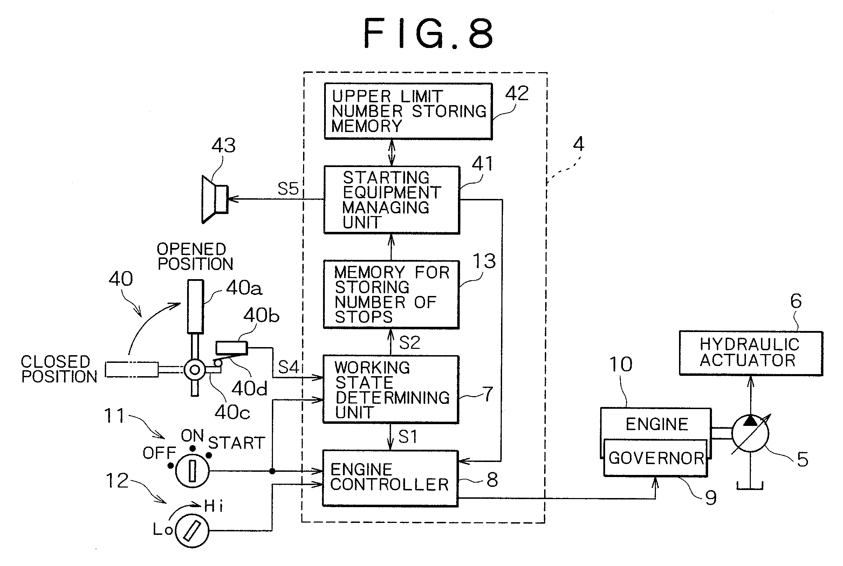

Fig. 8 shows still another embodiment of the engine control device according to the present invention.

In this figure, reference numeral 40 denotes a gate lever device provided on an access side of an operator's seat, and the gate lever device 40 is provided with a gate lever 40a that is opened/closed (pulled up/down) upon the operator getting on/off, and a limit switch 40b that detects the up/down of the gate lever 40a.

If the gate lever 40a is closed (refer to "CLOSED POSITION" in the figure), a pressing piece 40c comes in contact with a contact piece 40d of the limit switch 40b, thereby closing contacts of the limit switch 40b, resulting in an output of a gate close signal S4. On the other hand, if the gate lever 40a is opened (refer to "OPEN POSITION" in the figure), the gate close signal S4 is not output, and the working state determining unit 7 makes a determination of the non-working state according to a change of a signal level from "high" to "low".

Upon the determination of the non-working state being made, the working state determining unit (working state determining means) 7 outputs the signal S2 to the memory for storing the number of stops (stop history storing means) 13, upon receiving the signal S2, the memory for storing the number of stops 13 sets the previously stored stop number N to N=N+1, namely increments by one, and supplies a starting equipment managing unit 41 with the updated stop number N.

The starting equipment managing unit 41 compares the supplied stop number (corresponding to the remaining life) N and an upper limit number (corresponding to a preliminary life set a fixed period prior to the life) P stored in advance in an upper limit number storing memory 42, and outputs an alarm signal S5 to a speaker 43 thereby raising an alarm if the stop number N is more than the upper limit number P.

Namely, in the present embodiment, based upon an idea that a certain damage is applied to the engine starting equipment, specifically a starter motor, for each time the engine is stopped, resulting in a decrease of the life thereof, a correlation between the engine stop number and the life of the starter motor is experimentally obtained, the remaining life of the starter motor which decreases as the stop number N increases is represented as a chart, and the life of the starter motor is calculated by a correlation equation thereof.

The starting equipment managing unit 41 thus functions as calculating means for calculating the remaining life of the engine starting equipment, and determining means for determining whether the remaining life calculated by the calculating means is shorter than a preliminary life (set the fixed period prior to the life), the accumulated stop number N corresponds to the remaining life, and the upper limit number corresponds to the preliminary life set the fixed period prior to the life.

Although the alarm generates a predetermined alarm sound indicating that the life of the starter motor is expiring, the alarm may notify a voice message "Replacement of starter motor will soon be necessary". Moreover, the alarm is not limited to the voice notice, but may be a message visually shown on a monitor, or may be a combined notice of the voice notice and the visual display.

Moreover, upon the stop number N stored in the memory for storing the number of stops 13 exceeding the upper limit number P, the starting equipment management unit 41 commands the engine controller 8 not to carry out the automatic stop of the engine. After the alarm is raised, the engine can be stopped only if the operator intentionally stops the engine, and the automatic engine stop function is set not to operate in order to reduce frequency of the engine start. As a result, it is possible to extend the period until the life of the starter motor completely expires to a certain extent, thereby securing a period required to replace the starter motor.

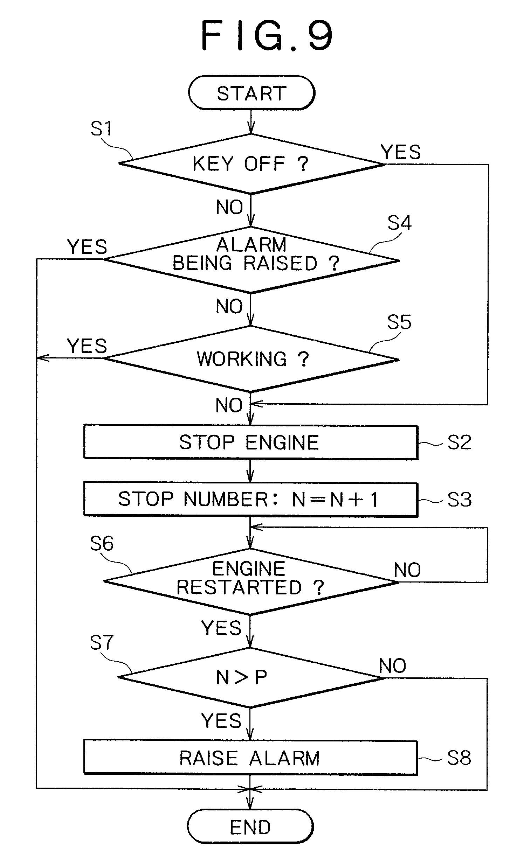

A description will now be given of an operation of the engine control device including the above configuration with reference to a flowchart in Fig. 9.

First, if the operator turns off the key switch 11 upon intentionally stopping the engine 10 (Step S1), the engine 10 is stopped (Step S2), the stop number N in the memory for storing the number of stops 13 is incremented by one to make an update to N+1 (Step S3).

Upon the stop number N not exceeding the upper limit number P, and thus the alarm not being raised (Step S4), if the gate lever 40a is opened, and the gate close signal S4 is not supplied from the limit switch 40b, the working state determining unit 7 makes a determination of the non-working state (Step S5), and outputs the engine stop command to the engine controller 8, thereby stopping the engine 10.

If the engine 10 is stopped according to an intention of the operator or an opening operation of the gate lever 40a, the stop number N is updated in either case in the memory for storing the number of stops 13.

If the engine 10 is restarted (Step S6), the starting equipment managing unit 41 compares the stop number N and the upper limit number P stored in the upper limit number storing memory 42 (Step S7).

If the stop number N > the upper limit number P, the alarm signal S5 is output to the speaker 43 to raise the alarm (Step S8). If the stop number N does not exceed the upper limit number P in Step S7, the alarm signal S5 is not output, and the processing ends.

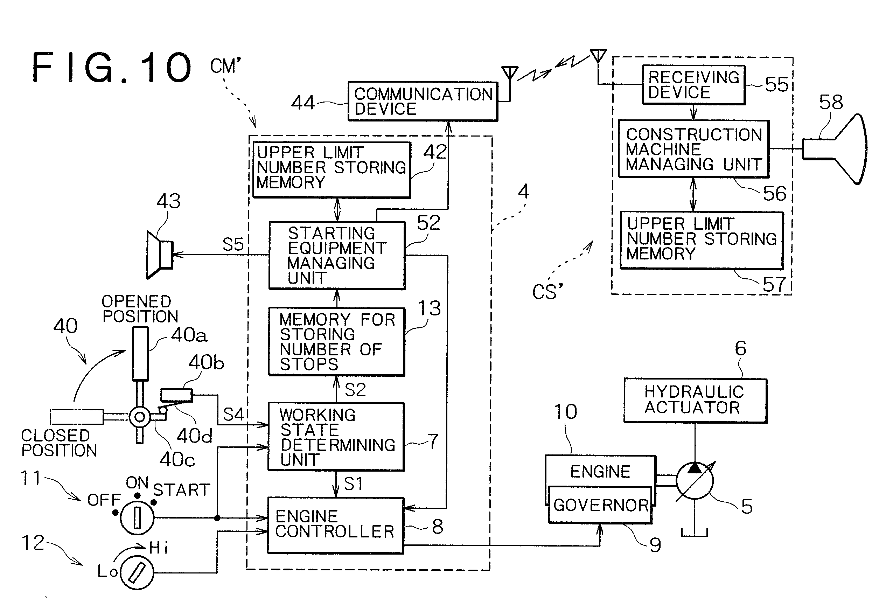

Fig. 10 shows another management system for a construction machine according to the present invention.

Although the engine control device shown in Fig. 8 is configured such that if the stop number N exceeds the upper limit number P, the alarm is raised from the speaker 43 to notify the operator that the life of the starter motor is expiring, the management system shown in Fig. 10 is configured such that a communication device 44 is provided for a construction machine CM', a stop history of the construction machine CM' is transmitted to a control server CS', and the life and the like of the starter motor are managed on the control server CS'.

In the management system shown in this figure, the stop number N stored in the memory for storing the number of stops 13 of the construction machine CM' is supplied to a starting equipment management unit 52.

The starting equipment managing unit 52 is provided with a function that compares the stop number N and the upper limit number P stored in the upper limit number storing memory 42, and raises the alarm from the speaker 43 upon N > P as in the starting equipment managing unit 41.

Data on the stop history transmitted from the communication device 44 is received by a receiving device 55 of the control server CS', and is supplied to a construction machine managing unit 56.

The construction machine managing unit 56 compares the stop number N in the stop history transmitted from the construction machine CM' and an upper limit number P' stored in advance in an upper limit number storing memory 57, and displays a notice that replacement of the starter motor will soon be necessary on a screen of a monitor (second notifying means) 58 upon the stop number N > the upper limit number P'.

Note that the upper limit number (second preliminary life set a fixed period prior to the life of the starter motor) P' set in the upper limit number storing memory 57 on the control server CS' is set to a value different from the upper limit number P set in the upper limit number storing memory 42 on the construction machine CM'. This is because the control server CS' has to manage the construction machine CM' so as not to stop for waiting for replacement parts. The upper limit number P' set in the upper limit number storing memory 57 on the control server CS' is thus set so as to secure a period to arrange the replacement parts. On the other hand, the upper limit number P set in the upper limit number storing memory 42 of the construction machine CM' only serves to notify the operator that the life of the starter motor is expiring, and the upper limit number P is set to a value close to the life.

Note that the construction machine management unit 56 functions as second calculating means for calculating the remaining life of the engine starting equipment, and second determining means for determining whether the remaining life is shorter than the second preliminary life.

Although the above embodiment is configured such that the presence of the working state is detected according to the up/down of the gate lever 40, the configuration is not limited to this example, and the presence of the working state may be detected according to a magnitude of operation pressure led out from a remote control valve of the operating lever.

Although the engine starting equipment according to the present invention is described with reference to the starter motor in the above embodiment, the engine starting equipment is not limited to the starter motor, and includes peripheral devices such as a circuit used to drive the starter motor.

INDUSTRIAL APPLICABILITY

As described above, the present invention is useful for construction machines such as a hydraulic excavator, and especially preferable for construction machines provided with a function to automatically stop the engine upon no operation being carried out.

**Claims**

1. An engine control device for a construction machine comprising an engine, a hydraulic pump driven by said engine serving as a power source, a hydraulic actuator actuated by pressure oil discharged from said hydraulic pump, working state determining means for determining whether the construction machine is in a working state or a non-working state, engine control means for automatically stopping said engine when said working state determining means determines that the construction machine is in the non-working state, and stop history storing means for readably storing a stop history of said engine stopped by said engine control means.

2. The engine control device for a construction machine according to claim 1, wherein said stop history storing means is configured to store the number of times said engine is stopped as the stop history.

3. The engine control device for the construction machine according to claim 1, further comprising stop period calculating means for calculating a stop period from a stop to a restart of said engine, said stop history storing means being configured to store an accumulated stop period which is obtained by accumulating the stop period calculated by said stop period calculating means within a predetermined period as the stop history.

4. The engine control device for the construction machine according to claim 3, further comprising fuel consumption storing means for storing a fuel consumption quantity per unit period of the construction machine, and saved fuel calculating means for calculating a fuel quantity saved within the accumulated stop period by multiplying the fuel consumption quantity by the accumulated stop period.

5. The engine control device for the construction machine according to claim 4, further comprising fuel cost converting means for converting the calculated saved fuel quantity into a fuel cost.

6. The engine control device for the construction machine according to claim 5, further comprising output means for outputting at least one of the number of the stop stored in said stop history storing means, the calculated saved fuel quantity, and the calculated fuel cost.

7. The engine control device for the construction machine according to any one of claims 2 to 6, further comprising calculating means for calculating a remaining life of engine starting equipment based upon the number of the stop stored in said stop history storing means for each time said engine is stopped, determining means for determining whether the remaining life calculated by said calculating means is shorter than a preliminary life set as a fixed period prior to the life, and notifying means for raising an alarm upon said determining means determining that the remaining life is shorter than the preliminary life.

8. The engine control device for the construction machine according to claim 7, wherein said determining means is configured to control said engine control means such that an automatic stop function of said engine is not activated upon determining that the remaining life is shorter than the preliminary life.

9. A management system for a construction machine, **characterized in that**:

   the construction machine including the engine control device according to any one of claims 1 to 6 comprises transmitting means for transmitting the stop history; and
   a management device for managing the construction machine comprises receiving means for receiving the transmitted stop history, saved fuel calculating means for calculating a savable fuel quantity based upon the received stop history, and converting means for converting the calculated saved fuel quantity calculated by said saved fuel calculating means into an amount of money.

10. A management system for a construction machine, **characterized in that**:

   the construction machine including the engine control device according to claim 7 or 8 comprises transmitting means for transmitting the stop history; and
   a management device for managing the construction machine comprising receiving means for receiving the transmitted stop history, a second calculating means for calculating a remaining life of the engine starting equipment based upon the received stop history, a second determining means for determining whether the remaining life calculated by said second calculating means is shorter than a second preliminary life set as a fixed period prior to the life, and second notifying means for raising an alarm upon said second determining means determining that the remaining life is shorter than the second preliminary life.

# F I G. 1

# F I G . 2

```
                    ┌─────────────┐
                    │    START    │
                    └─────────────┘
                           │        ┌──────────────┐
                           ▼        │              │
   S1                 ◇─────────────────◇          │
         ─────────  ◇                     ◇  YES    │
                    ◇    WORKING ?        ◇─────────┘
                     ◇                   ◇
                       ◇───────────────◇
                           │ NO
                           ▼
              ┌──────────────────────────┐
              │       STOP ENGINE        │────── S2
              └──────────────────────────┘
                           │
                           ▼
              ┌──────────────────────────┐
              │  STOP NUMBER : N = N + 1  │────── S3
              └──────────────────────────┘
                           │
                           ▼
              ┌──────────────────────────┐
              │   STORE STOP TIME Te      │────── S4
              └──────────────────────────┘
                           │        ┌──────────────┐
                           ▼        │              │
   S5                 ◇─────────────────◇          │
         ─────────  ◇                     ◇  NO     │
                    ◇      ENGINE          ◇────────┘
                     ◇  RESTARTED ?       ◇
                       ◇───────────────◇
                           │ YES
                           ▼
              ┌──────────────────────────┐
              │  STORE START TIME Ts      │────── S6
              └──────────────────────────┘
                           │
                           ▼
              ┌──────────────────────────┐
              │ STOP PERIOD : ΔT = Ts − Te│────── S7
              └──────────────────────────┘
                           │
                           ▼
              ┌──────────────────────────┐
              │ STOP PERIOD : L = L + ΔT  │────── S8
              └──────────────────────────┘
                           │
                           ▼
                    ┌─────────────┐
                    │     END     │
                    └─────────────┘
```

# FIG.3

ENGINE ROTATIONAL SPEED (rpm)

Te＝10:35:00

Ts＝10:40:30

ΔT＝0 HOUR
5 MINUTES
30 SECONDS

S

TIME

ENGINE
AUTOMATICALLY
STOPPED

ENGINE
RESTARTED

EP 1 589 211 A1

EP 1 589 211 A1

# FIG.4

FUEL DATABASE 24

SAVED FUEL CALCULATING UNIT

SAVED FUEL STORING MEMORY 25

23

4

DISPLAY 18

READ OUT UNIT 17

DISPLAY SWITCH 19

13
MEMORY FOR STORING NUMBER OF STOPS

16
MEMORY FOR STORING ACCUMULATED PERIOD OF STOPS

PRE-ENGINE STOP ROTATIONAL SPEED STORING MEMORY 22

11
OFF ON START

S2

WORKING STATE DETERMINING UNIT 7

S3

STOP PERIOD CALCULATING UNIT 14

PRE-ENGINE STOP ROTATIONAL SPEED DETECTING UNIT 21

1
3a a b 3b
P P

S1

S1

INTERNAL CLOCK 15

Hi
Lo
12

ENGINE CONTROLLER 8

6
HYDRAULIC ACTUATOR

20

10 ENGINE

GOVERNOR 9

5 2

# FIG. 5

FUEL CONSUMPTION DATABASE

| PRE-ENGINE STOP ROTATIONAL SPEED [rpm] | FUEL CONSUMPTION [L/h] |
|---|---|
| 700 | 2.0 |
| 800 | 2.1 |
| 900 | 2.3 |
| • | • |
| • | • |
| • | • |
| • | • |
| • | • |
| • | • |
| • | • |
| 2000 | 6.2 |
| 2100 | 6.5 |
| 2200 | 6.7 |

FIG.6

EP 1 589 211 A1

# FIG.7

ON CONSTRUCTION MACHINE

START

S10 — WORKING ? — YES

NO

S11 — STOP ENGINE

S12 — START COUNTING    S15

COUNT UP

S13 — ENGINE RESTARTED ? — NO

YES

KEY OFF ? — NO

S14    YES

S16 — CALCULATE STOP PERIOD

S17 — STORE ACCUMULATED STOP PERIOD

S18 — END OF MONTH ? — NO

YES    S19

TRANSMIT ACCUMULATED STOP PERIOD

CLEAR ACCUMULATED STOP PERIOD

S20

END

ON CONTROL SERVER

START

S21 — ACCUMULATED PERIOD RECEIVED ? — NO

S22    YES

CALCULATE SAVED FUEL QUANTITY

CALCULATE BILLING AMOUNT OF MONEY

S23

OUTPUT BILL

S24

END

FIG.8

# FIG.9

START

S1 KEY OFF ? — YES

NO

S4 ALARM BEING RAISED ?

YES

NO

S5 WORKING ?

YES

NO

STOP ENGINE — S2

STOP NUMBER: N = N + 1 — S3

S6 ENGINE RESTARTED ? — NO

YES

S7 N > P — NO

YES

RAISE ALARM — S8

END

# FIG.10

CM'

44 COMMUNICATION DEVICE

RECEIVING DEVICE 55

58

UPPER LIMIT NUMBER STORING MEMORY 42

CONSTRUCTION MACHINE MANAGING UNIT

56

4

43

S5

STARTING EQUIPMENT MANAGING UNIT 52

UPPER LIMIT NUMBER STORING MEMORY

57

CS'

OPENED POSITION

40

40a

40b

MEMORY FOR STORING NUMBER OF STOPS 13

CLOSED POSITION

40d

40c

S2

6

HYDRAULIC ACTUATOR

S4

WORKING STATE DETERMINING UNIT 7

10

11

ON START

OFF

S1

5

12

Hi

Lo

ENGINE CONTROLLER 8

ENGINE

GOVERNOR

9

EP 1 589 211 A1

<div align="center">

**INTERNATIONAL SEARCH REPORT**

</div>

| | International application No. |
|---|---|
| | PCT/JP2004/000852 |

**A. CLASSIFICATION OF SUBJECT MATTER**
Int.Cl$^7$  F02D45/00, F02D29/00, E02F9/20

According to International Patent Classification (IPC) or to both national classification and IPC

**B. FIELDS SEARCHED**

Minimum documentation searched (classification system followed by classification symbols)
Int.Cl$^7$  F02D45/00, F02D29/00, F02D17/00, E02F9/20

Documentation searched other than minimum documentation to the extent that such documents are included in the fields searched

| Jitsuyo Shinan Koho | 1922–1996 | Jitsuyo Shinan Toroku Koho | 1996–2004 |
|---|---|---|---|
| Kokai Jitsuyo Shinan Koho | 1971–2004 | Toroku Jitsuyo Shinan Koho | 1994–2004 |

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| Y | JP 2002-13425 A  (Kobelco Construction Machinery Co., Ltd.), 18 January, 2002 (18.01.02), Full text; all drawings (Family: none) | 1–10 |
| Y | JP 2001-263210 A  (Denso Corp.), 26 September, 2001 (26.09.01), Full text; all drawings (Family: none) | 1,2,7,8,10 |
| Y | JP 60-113042 A  (Isuzu Motors Ltd.), 19 June, 1985 (19.06.85), Full text; all drawings (Family: none) | 1,2,7,8,10 |

☒  Further documents are listed in the continuation of Box C.  ☐  See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| 07 May, 2004 (07.05.04) | 25 May, 2004 (25.05.04) |

| Name and mailing address of the ISA/ | Authorized officer |
|---|---|
| Japanese Patent Office | |
| Facsimile No. | Telephone No. |

Form PCT/ISA/210 (second sheet) (January 2004)

**EP 1 589 211 A1**

| INTERNATIONAL SEARCH REPORT | | International application No. |
|---|---|---|
| | | PCT/JP2004/000852 |

C (Continuation). DOCUMENTS CONSIDERED TO BE RELEVANT

| Category* | Citation of document, with indication, where appropriate, of the relevant passages | Relevant to claim No. |
|---|---|---|
| Y | JP 2000-205030 A (Mitsubishi Electric Corp.), 25 July, 2000 (25.07.00), Full text; all drawings (Family: none) | 3-9 |

Form PCT/ISA/210 (continuation of second sheet) (January 2004)